# EUROPÄISCHE PATENTSCHRIFT

(11) **EP 2 190 281 B1**
(45) Veröffentlichungstag und Bekanntmachung des Hinweises auf die Patenterteilung: **08.11.2017**
(21) Anmeldenummer: 08801236.4
(22) Anmeldetag: 27.08.2008
(51) Int. Cl.: A01G 13/02

(54) **GEOMATTE**
GEOMAT
GÉOTAPIS

(30) Priorität: 10.09.2007 DE 202007012632 U
(43) Veröffentlichungstag der Anmeldung: 02.06.2010
(73) Patentinhaber: Geotex Gmbh, 99817 Eisenach (DE)
(72) Erfinder: HOLLAND-MORITZ, Jan, 98587 Oberschönau (DE); HOLLAND-MORITZ, Raik, 98587 Oberschönau (DE)
(74) Vertreter: Weihrauch, Frank
(86) Internationale Anmeldenummer: PCT/DE2008/001428
(87) Internationale Veröffentlichungsnummer: WO 2009/033449

(56) Entgegenhaltungen:
- WO-A-97/34034
- DE-U1- 20 106 875
- DE-U1- 20 207 782
- DE-U1- 29 918 940
- DE-U1-202005 004 354
- US-B1- 6 407 039

## Beschreibung

Die Erfindung bezeichnet eine Geomatte als Erosionsschutz und Begrünungshilfe sowie zur Pflanzenzucht und zum Pflanzenanbau.

Es sind textile Flächengebilde als Geotextilien in Form von ein- oder mehrschichtigen Matten aus Gewebe und/oder Vlies zur Sicherung gegen Erosion als Vegetationsträger und Begrünungshilfen bekannt, die in der Regel einen Anteil an Pflanzenfasern sowie weitere Zusatzstoffe aufweisen und zumindest teilweise verrottbar sind.

Aus der Druckschrift DE 202 07 782 U1 ist eine bodensubstratbildende wasser- und nährstoffspeichernde sowie über die biologisch abbaubaren Bestandteile und Zuschlagstoffe nährstoffliefernde, überwiegend aus nachwachsenden Rohstoffen bestehende Vegetationshilfe mit Erosionsschutzeffekt zur Vermeidung von Wasser- und Winderosion sowie zur Begrünung an extremen Standorten bekannt.
Diese Vegetationshilfe besteht aus einem textilen Flächengebilde aus Kunstharz- oder Pflanzenfasern und einer Stoffgemischmasse aus organischen Stoffen, wie Trester, Melasse, Pflanzenfasern, Sägespänen, Zellulose, Kompost, Federmehl, Hornspänen, denen wasserabsorbierende und mineralische Stoffe sowie Bindemittel zugesetzt sein können. Die Stoffgemischmasse ist rasterförmig an den Kreuzungspunkten des textilen Flächengebildes aufgebracht.

Mit der Haltbarkeit von nur einer Vegetationsperiode und dem auch nur dafür ausreichenden Nährstoffdepot ist das Begrünen mit Gräsern und Ähnlichem zwar gegeben, jedoch ist dies für Gehölze nicht ausreichend. Bei Verwendung von Kunstharzfasern für das textile Flächengebilde kann dieses nur unvollständig biologisch abgebaut werden.
Die Herstellung der Vegetationshilfe ist zudem aufwändig.

In der Druckschrift DE 299 18 940 U1 wird eine Textilmatte für die Begrünung von mutterbodenlosen Erdoberflächen beschrieben. Die Textilmatte in Form eines Mehrschichtelements besteht vorwiegend aus verrottenden Faserstoffen mit einer wellenförmig strukturierten Oberfläche.
Das Mehrschichtelement weist ein textiles Netzgewebe als festigkeitstragende Unterschicht, eine Mittelschicht aus einem Faservlies aus vorwiegend verrottbaren Fasern mit eingestreuten Funktionselementen, wie Pflanzensamen, Wasserspeicherelemente und Dünger und eine Deckschicht aus einem dünnen Vlies aus grasgrünen Fasern auf. Durch steppartige Verbindungen der drei Schichten in bestimmten Abständen, parallel zur Herstellungsrichtung, sind wasserspeichernde und wasserstauende Wirkungslinien vorhanden.

Der mehrschichtige Aufbau der Matte und die Herstellung aus unterschiedlichsten Materialien ist ebenfalls mit hohem Aufwand verbunden.

Ein Vegetationsträger aus organischen verrottbaren Fasermaterialien wird in der Druckschrift DE 20 2005 004 354 U1 beschrieben, dessen Vegetationstragschicht aus einem Vlies aus Schafrohwolle besteht, die durch ober- und unterseitig angeordnete Armierungsgewebe und/oder durch einen Armierungsfaden zum Herstellen der erforderlichen Zugfestigkeit fixiert ist.

Auch nach dieser Lösung lassen sich nur Vegetationstragschichten mit geschlossener Oberfläche realisieren, die eine Bepflanzung oder Besämung erschweren und ebenfalls einen relativ hohen Herstellungsaufwand erfordern.

Bei der Verwendung für den Gewächshausanbau ist zudem eine oberflächliche oder vollständige Umhüllung mit einer Folieabdeckung vorgesehen, die ökologisch äußerst bedenklich ist.

Aufgabe der Erfindung ist es, eine Geomatte zur Verhinderung von Erosion, zur Rekultivierung von Brachen und zur Kultivierung von Pflanzen zu entwickeln, die vollständig biologisch abbaubar und mit geringem Aufwand kostengünstig herstellbar ist als auch alle ökologischen Anforderungen erfüllt.

Eine erfindungsgemäße Geomatte besteht im Wesentlichen aus einem, in Längsrichtung miteinander verbundenen, in der gewünschten Breite der Matte mäanderförmig angeordneten, endlosen Strang aus naturbelassener Schafwolle.

Optional kann dem Strang aus Schafwolle Stroh oder Heu als zusätzlicher Nährstofflieferant zugesetzt sein.

Der Durchmesser des Strangs liegt im Bereich von 2 bis 10 cm, vorzugsweise bei 4 cm.

In Abhängigkeit vom Einsatzzweck der Geomatte, wie als Erosionsschutz und Begrünungshilfe, beträgt der Abstand der Mäander zueinander mindestens die Hälfte des Durchmessers des Strangs bis zu einem Mehrfachen, insbesondere das Einfache.

In Längsrichtung, jeweils an der Seite und über die Breite verteilt, sind mehrere Verbindungen, insbesondere in Form von Kettengewirken angeordnet.

Der Abstand zwischen den Verbindungen ist hierbei so gewählt, dass der Abstand der Stränge zueinander beim Verlegen der Geomatte erhalten bleibt.

Bei Verwendung der Geomatte zur Pflanzenzucht oder im Pflanzenanbau liegen die Stränge der Mäander als Schuss unmittelbar nebeneinander und sind mit Garn in Längsrichtung verwebt, verbunden, so dass eine Geomatte mit geschlossener Oberfläche vorliegt.

Zu kultivierende Pflanzen können sowohl in die Stränge gesetzt werden, oder wenn die Geomatte zur Schaffung eines wuchsfördernden Mikroklimas und als Verdunstungsschutz dienen soll, auch zwischen die im Mäander liegenden Stränge.

Die Verbindungen bestehen aus einem Garn, das ebenfalls aus Schafwolle oder einem anderen verrottbaren Material, wie Hanf- oder Kokosfasern besteht.

Die Geomatte wird nach der Fertigung gerollt, wobei diese dann als Rolle mit einer bevorzugten Breite von 120 Zentimeter vorliegt, um übliche Transport- und Lagermittel optimal ausnutzen zu können.

Samen von Gräsern und Ähnlichem sowie Startdünger können in die Geomatte bzw. Stränge in üblicher Weise eingebracht sein.

Die Vorteile der Geomatte aus unbehandelter, naturbelassener Schafwolle bestehen insbesondere darin, dass
- die Schafwolle Niederschlagswasser in der Größenordnung des Vierfachen der Eigenmasse aufnehmen und speichern kann sowie langsam an die Umgebung, das Saatgut, die Wurzeln von Pflanzen und das darunter liegende Erdreich abgibt;
- ein Verdunstungsschutz für den Boden gegeben ist;
- ein Abspülen von Bodenbestandteilen, die zwischen den Mäandern eingebracht sind oder sich unter der Geomatte befnden, verhindert wird;
- eine Dränagewirkung zum Ableiten großer Niederschlagsmengen in Entwässerungssysteme mittels der Mäander erzielt wird;
- in den Strang Pflanzensamen auf übliche, einfache Weise Pflanzensamen und zusätzliche Nährstoffdepots integriert werden können;
- sich in der Nähe der Oberfläche der Geomatte ein für den Pflanzenwuchs günstiges Mikroklima mit Temperaturausgleich sowie Kälteschutz einstellt, wodurch in klimatisch ungünstigen Lagen der Anbau bestimmter Kulturen erst ermöglicht wird und Ertragssteigerungen erzielt werden;
- vom Material der Geomatte, der Schafwolle, Nährstoffe für das Wachstum von Pflanzen beim Verrotten zur Verfügung gestellt werden.

Bei der Herstellung der Geomatte aus Schafwolle fallen keinerlei Abfälle an.

Es liegt somit ein alle ökologischen Forderungen erfüllendes Produkt in Form der Geomatte vor, das innerhalb der Zeit verrottet, die das Wachstum der ehemals in die Geomatte eingebrachten Saaten und/oder gesetzten Pflanzen benötigen, bis die Vegetation soweit fortgeschritten ist, dass diese mit ihren Wurzeln eine Bodenerosion sicher verhindern.

Die Geomatte kann auch als Pflanzsubstrat genutzt werden.

Das Verlegen der Geomatte erfolgt günstigerweise auf vorbereitetem, eingeebnetem Untergrund. In Hanglagen erfolgt die Befestigung in bekannter Weise mittels verrottbaren Erdnägeln, Holzpflöcken oder bewurzelbaren Stecklingen.

Eine zusätzliche Überdeckung der Geomatte mit Erdreich zur Ansaat oder das Setzen von Pflanzen ist möglich, jedoch in der Regel nicht erforderlich.
Die Produktion der Schafwolle als Ausgangsmaterial für die Geomatte erfolgt ebenso in völligem Einklang mit Umwelt und Natur.

An die Schafwolle werden keine besonderen Anforderungen gestellt, da aus diesen auf herkömmliche Weise die Stränge geformt werden.

Jede Art naturbelassener Schafwolle oder Wolle ähnlicher Eigenschaften kann zur Formung der Stränge und somit zur Herstellung der Geomatte genutzt werden.

Die Erfindung wird als Ausführungsbeispiel an Hand von
- Fig. 1: als schematische Darstellung einer Geomatte zum Erosionsschutz und als Begrünungshilfe und
- Fig. 2: als schematische Darstellung einer Geomatte zum Einsatz zur Pflanzenzucht oder im Pflanzenanbau
näher erläutert.

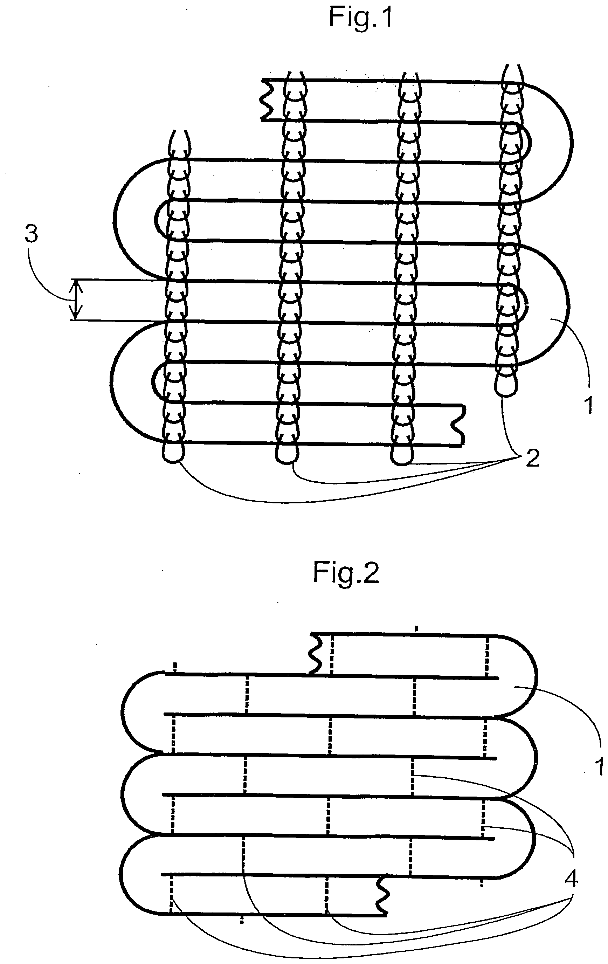

Nach Fig. 1 besteht eine Geomatte für den Erosionsschutz und als Begrünungshilfe aus einem endlosen Strang 1 naturbelassener Schafwolle, der über die Breite mäanderförmig angeordnet ist und in Längsrichtung mittels Kettengewirken 2 verbunden ist. Die Kettengewirke 2 sind jeweils an der Seite und mehrfach über die Breite der Geomatte so angeordnet, dass ein Abstand 3 der Mäander zueinander beim Verlegen der Geomatte erhalten bleibt.

Eine Geomatte zur Verwendung in der Pflanzenzucht oder im Pflanzenanbau ist in Fig. 2 dargestellt. Bei dieser liegen die Stränge 1 der Mäander als Schuss unmittelbar nebeneinander und sind vorzugsweise mit einem verrottbaren Garn 4 in Längsrichtung durch Verweben verbunden, so dass eine Geomatte mit geschlossener Oberfläche vorliegt.

Verwendete Bezugszeichen
- 1: Strang
- 2: Kettengewirk
- 3: Abstand
- 4: Garn

## Patentansprüche

1. Geomatte aus naturbelassener Schafwolle zur Verhinderung von Erosion, zur Rekultivierung von Brachen und zur Kultivierung von Pflanzen, **dadurch gekennzeichnet,**
**dass** die Geomatte im Wesentlichen aus einem, in Längsrichtung miteinander verbundenen, in der gewünschten Breite der Matte mäanderförmig angeordneten, endlosen Strang (1) aus naturbelassener Schafwolle besteht.

2. Geomatte nach Anspruch 1, **dadurch gekennzeichnet,**
**dass** die Mäander aus dem Strang (1) zueinander mit mindestens der Hälfte bis zu einem Mehrfachen, vorzugsweise des einfachen Durchmessers des Strangs (1) beabstandet angeordnet sind und mit in Längsrichtung, an beiden Seiten sowie mehreren über die Breite angeordneter Kettengewirke (2), verbunden sind.

3. Geomatte nach Anspruch 1, **dadurch gekennzeichnet,**
**dass** die Mäander aus dem Strang (1) als Schuss unmittelbar nebeneinander angeordnet und mit einem verrottbarem Garn (4) in Längsrichtung verwebt, verbunden, sind und die Geomatte eine geschlossene Oberfläche aufweist.

4. Geomatte nach Anspruch 1 und 2 oder 3, **dadurch gekennzeichnet,**
**dass** der Strang (1) einen Durchmesser im Bereich von 2 bis 10 cm, vorzugsweise von 4 cm aufweist.

5. Geomatte nach Anspruch 1 und 2 oder 3 und 4, **dadurch gekennzeichnet,**
**dass** der Schafwolle des Strangs (1) Stroh oder Heu zugesetzt ist.

6. Geomatte nach den Ansprüchen 1 und 2 oder 3 sowie 4 und 5, **dadurch gekennzeichnet,**
**dass** in den Strang (1) Pflanzensamen und zusätzliche Nährstoffdepots integriert sind.

## Claims

1. Geomat of natural sheep's wool for preventing erosion, for re-cultivating fallow land and for cultivating plants, **characterized in that**
the geomat essentially consists of one endless string (1) of natural sheep's wool, which is arranged in a meander pattern in the desired width of the mat and the meanders are connected in longitudinal direction.

2. Geomat according to claim 1, **characterized in that**
the meanders of the string (1) are arranged at a distance to each other, which is half to multiple, preferentially once, the diameter of the string (1), and are connected by warp knit fabric (2) in longitudinal direction at both sides as well as over the entire width.

3. Geomat according to claim 1, **characterized in that**
the meanders of the string (1) are weft-like arranged directly next to each other and are, by interweaving with a decomposable thread, connected with each other in longitudinal direction, and the geomat has a closed surface.

4. Geomat according to claim 1 and 2 or 3, **characterized in that**
the string (1) has a diameter of 2 to 10 cm, preferentially of 4 cm.

5. Geomat according to claim 1 and 2 or 3 and 4, **characterized in that**
straw or hay is added to the sheep's wool of the string (1).

6. Geomat according to claim 1 and 2 or 3 as well as 4 and 5, **characterized in that**
plant seeds and additional nutrient deposits are integrated into the string (1).

## Revendications

1. Géotapis en laine de mouton naturelle pour empêcher l'érosion, pour remettre en culture des friches et pour cultiver des plantes est **caractérisé en ce**
**que** le géotapis est essentiellement constitué d'une mèche (1) sans fin de laine de mouton naturelle disposée en la largeur souhaitée du tapis, en méandres reliés les uns aux autres dans le sens de leur longueur.

2. Géotapis suivant la revendication 1 est **caractérisé en ce**
**que** les méandres de la mèche (1) sont disposés à une distance l'un de l'autre d'au moins la moitié jusqu'à un multiple, de préférence du simple diamètre de la mèche (1) et sont reliés à l'aide de plusieurs tricots de chaîne (2) disposée sur toute la largeur et sur les deux côtés dans le sens de leur longueur.

3. Géotapis suivant la revendication 1 est **caractérisé en ce**
**que** les méandres de la mèche (1) sont disposés en trame directement l'une à côté de l'autre, reliés à l'aide des fils putrescibles (4) et entrelacés dans le sens de leur longueur et que le géotapis présente une surface fermée.

4. Géotapis suivant les revendications 1 et 2 ou 3 est **caractérisé en ce**
**que** le diamètre de la mèche (1) se trouve dans la gamme de 2 à 10 cm, de préférence de 4 cm.

5. Géotapis suivant les revendications 1 et 2 ou 3 et 4 est **caractérisé en ce**
**que** de la paille ou du foin est ajoutée à la laine de mouton de la mèche (1).

6. Géotapis suivant les revendications 1 et 2 ou 3 ainsi que 4 et 5 est **caractérisé en ce**
**que** des graines de plantes et des dépôts supplémentaires de substances nutritives sont incorporés dans la mèche (1).
